# EUROPÄISCHE PATENTSCHRIFT

(11) **EP 2 778 102 B1**
(45) Veröffentlichungstag und Bekanntmachung des Hinweises auf die Patenterteilung: **17.06.2015**
(21) Anmeldenummer: 13001571.2
(22) Anmeldetag: 27.03.2013
(51) Int. Cl.: B65G 47/82, B65G 47/88

(54) **Funktionskomponente einer Horizontalfördereinrichtung sowie Horizontalfördereinrichtung mit mindestens einer solchen Funktionskomponente**
Functional component of a horizontal conveyor and horizontal conveyor with at least one such functional component
Composant fonctionnel d'un dispositif de transport horizontal et dispositif de transport horizontal doté d'au moins un tel composant fonctionnel

(30) Priorität: 15.03.2013 DE 102013004447
(43) Veröffentlichungstag der Anmeldung: 17.09.2014
(73) Patentinhaber: WEKAL Maschinenbau GmbH, 34560 Fritzlar (DE)
(72) Erfinder: Albers, Jürgen, 34560 Fritzlar (DE); Chlodek, Adam, 34281 Gudensberg (DE)
(74) Vertreter: Walther, Walther & Hinz GbR

(56) Entgegenhaltungen:
- WO-A2-2004/085295
- DE-U1-202011 108 848
- JP-A- 2007 282 478
- US-A1- 2004 050 661
- US-B1- 6 189 702

## Beschreibung

Die Erfindung betrifft einerseits eine Funktionskomponente einer Horizontalfördereinrichtung nach dem Oberbegriff des Anspruchs 1. Eine derartige Funktionskomponente ist bereits aus DE-U-20 2011 108 848 bekannt. Andererseits betrifft die Erfindung eine Horizontalfördereinrichtung mit mindestens einer solchen Funktionskomponente.

Horizontalfördereinrichtungen sind aus dem Stand der Technik hinreichend bekannt. Diese dienen in der Fertigung beispielsweise dem Transport von Werkstückträgern von einem Arbeitsplatz zum nächsten. In der Logistik, beispielsweise in der Lagertechnik, sind Horizontalfördereinrichtungen ebenfalls bekannt, wobei hier Transporteinrichtungen teilweise als Paletten oder als Kisten ausgebildet sind, um Gegenstände vom Regal zu einer Um- oder Auspackstation oder von einer Einpackstation in das Regal zu transportieren.

Eine bekannte Horizontalfördereinrichtung in der Fertigung umfasst eine Horizontalförderbahn, wobei die Horizontalförderbahn im Querschnitt zwei horizontale Schenkel aufweist, zwischen denen sich eine rechteckförmige Vertiefung befindet, wobei in der Vertiefung die Transportkette umlaufend angetrieben angeordnet ist. Die Werkstückträger als Transporteinrichtungen sind im Wesentlichen komplementär ausgebildet zu dem Querschnitt der Horizontalförderbahn. Das heißt, dass eine Transporteinrichtung beispielsweise in Form eines Werkstückträgers etwa mittig ein oder mehrere Füße aufweist, mit denen der Werkstückträger auf der Kette aufsteht und durch Reibschluss zwischen Kette und Fuß des Werkstückträgers der Werkstückträger entlang der Förderbahn bewegt wird. Seitlich stützen sich die Werkstückträger auf den Schenkeln der Horizontalförderbahn ab.

Im Folgenden sei nun die Erfindung anhand des Transports von Werkstückträgern erläutert, obwohl die Erfindung sich nicht nur auf eine Horizontalförderbahn für Werkstückträger bezieht, sondern für Transporteinrichtungen ganz allgemein.

Der Transport von Werkstückträgern auf einer Horizontalfördereinrichtung bedingt insbesondere in der Fertigung, dass die zu transportierenden Gegenstände in bestimmten zeitlichen Abständen einem bestimmten Arbeitsplatz zugeführt werden. Stehen insofern beispielsweise auf einer Horizontalförderbahn mehrere derartige Werkstückträger hintereinander vor einem Arbeitsplatz an, so muss durch einen Vereinzelungsmechanismus sichergestellt werden, dass von diesen mehreren auf der Horizontalförderbahn befindlichen Werkstückträgern diese immer vereinzelt zeitlich getaktet dem entsprechenden Arbeitsplatz zugeführt werden. Hierzu weist die Horizontalförderbahn mindestens eine sogenannte Funktionskomponente auf, wobei eine solche Funktionskomponente zur Vereinzelung mehrerer hintereinander auf der Horizontalförderbahn aufstehender Werkstückträger einen in die Horizontalförderbahn einfahrbaren Finger als Stopper umfasst, wobei durch den Finger der Werkstückträger angehalten also gestoppt wird. Das bedeutet, dass sich die Förderkette unter dem Werkstückträger hindurchbewegt, wobei dann, wenn der Finger wieder zurückgezogen wird, der Werkstückträger weiterverfahren wird. Bei der Vereinzelung mehrerer hintereinander aufstehender Werkstückträger kann es sein, das der als Stopper fungierende Finger ohne seine Endstellung zu erreichen, an dem Werkstückträger entlanggleitet, und erst dann in der Lage ist, seine Endstellung in vollständig ausgefahrener Position zu erreichen, wenn sich eine Lücke in dem Werkstückträger bietet, in die der Finger zum Stoppen des Werkstückträgers einlaufen kann. Nun ist es nach dem Stand der Technik so, dass der Finger einer solchen Funktionskomponente pneumatisch betätigt ist. Hierbei wird der Druck auf den Kolben des Pneumatikzylinders so lange aufrechterhalten, bis der Finger die Lücke in dem Werkstückträger findet und dort einlaufen kann.

Insbesondere dann, wenn sich die Horizontalfördereinrichtung verzweigt, also sich in mehrere Horizontalförderbahnen teilt, sind in der Horizontalförderbahn verschwenkbar angeordnete Weichenzungen vorgesehen, durch die ein Ausschleusvorgang eingeleitet wird. Eine solche Funktionskomponente als Weiche mit einer Weichenzunge wird ebenfalls nach dem Stand der Technik druckluftbetätigt betrieben. Das heißt, es ist ein Pneumatikzylinder vorgesehen, durch den die Bewegung der Weichenzunge zur Einleitung eines Ausschleusvorganges initiiert wird.

Gleichfalls ist bekannt, in der Horizontalförderbahn eine Hubeinrichtung vorzusehen. Durch eine solche Hubeinrichtung wird der Werkstückträger um einen bestimmten Hub angehoben, um beispielsweise einem Roboterarm die Entnahme des Werkstückes vom Werkstückträger zu ermöglichen. Eine solche Hubeinrichtung ist ebenfalls nach dem Stand der Technik druckluftbetätigt, das heißt, sie umfasst zumindest einen Pneumatikzylinder. Sowohl bei der Weichenzunge als auch bei der Hubeinrichtung kann es sein, dass ähnlich wie bei der Funktionskomponente, die einen in die Horizontalförderbahn einfahrbaren Finger als Einrichtung der Interaktion mit dem Werkstückträger aufweist, auch hier der Weg des Pneumatikzylinders zur Erreichung seiner Endlage blockiert sein kann. Das heißt, auch hier steht der Pneumatikzylinder unter ständigem Druck, sodass erst dann, wenn das Hindernis beseitigt ist, der Pneumatikzylinder seine Endlage erreichen kann.

Solche pneumatischen Antriebe haben verschiedene Vorteile. Sie sind einfach in der Handhabung, weisen eine robuste Bauweise auf, sind nur in geringem Maße wartungsanfällig, die Ansteuerung lässt sich einfach bewerkstelligen und sie sind kostengünstig in der Anschaffung. Sie sind darüber hinaus weitgehend unempfindlich gegen Umwelteinflüsse, insbesondere unempfindlich gegen Verschmutzung, der Hub bzw. der Weg des Pneumatikzylinders ist bauartbedingt mechanisch referenziert, und was schlussendlich noch einen wesentlichen Vorteil darstellt, dass die von dem Pneumatikzylinder aufgebrachte Kraft konstant bleibt, unabhängig von dem Hub des Pneumatikzylinders.

Es gibt allerdings auch eine ganz Reihe von Nachteilen, die sich wie folgt darstellen: Pneumatikantriebe benötigen eine aufwendige externe Peripherie mit Schläuchen, Ventilen sowie mindestens einen Windkessel und einen Kompressor. Trotz eines solchen Windkessels läuft ein Kompressor im Wesentlichen ununterbrochen, was insbesondere auch darin begründet ist, dass die Komponenten einer solchen Druckluftanlage mit der Zeit leck werden. Dies bedingt naturgemäß höhere Kosten. Darüber hinaus ist die Installation relativ aufwendig, da schlussendlich sowohl die Schläuche für die Druckluftanlage, als auch die Verkabelung für die Ansteuerung bis zu jeder einzelnen Station der Horizontalfördereinrichtung geführt werden müssen, an der sich eine Funktionskomponente der zuvor genannten Art befindet. Wie bereits erläutert, wird bei Druckluftantrieben insbesondere als nachteilig empfunden der hohe Energieaufwand und der Aufwand für die Erstellung der Druckluftanlage selbst.

Die der Erfindung zugrunde liegende Aufgabe besteht demzufolge darin, hier Abhilfe zu schaffen.

Zur Lösung der Aufgabe dienen die Merkmale des kennzeichnenden Teils des Anspruches 1 in Verbindung mit den Merkmalen des Oberbegriffes. So ist insbesondere vorgesehen, dass die Antriebseinrichtung einer Funktionskomponente einer Horizontalfördereinrichtung einen Servomotor umfasst, wobei der Servomotor eine Regelung aufweist, wobei durch die Regelung bei Nichterreichen einer vorgegebenen Endlage des Servomotors die Bestromung des Servomotors aufrechterhalten bleibt, jedoch die Stromaufnahme durch den Servomotor in Abhängigkeit von der max. zulässigen Temperatur des Servomotors geregelt wird. Es wurde bereits in Bezug auf die Druckluftantriebe darauf hingewiesen, dass es bei einem Pneumatikzylinder völlig unproblematisch ist, wenn der Pneumatikzylinder, egal in welcher Stellung er sich befindet, also ob er ausgefahren ist oder sich in einer Mittelstellung zwischen ausgefahrener und eingefahrener Position befindet, über einen beliebigen Zeitraum mit Druckluft beaufschlagt werden kann. Der Pneumatikzylinder nimmt hierbei keinen Schaden. Anders stellt sich die Angelegenheit bei der Verwendung von elektrischen Antrieben dar. Erreicht ein Elektromotor seine vorgegebene Endlage nicht, und wird der Elektromotor weiterhin bestromt, dann hat dies üblicherweise zur Folge, dass der Elektromotor auf Störung schaltet, das heißt sich ausschaltet, weil er sonst überhitzt. Dies hat aber bei einer Vereinzelungseinrichtung einer Horizontalfördereinrichtung mit mehreren Werkstückträgern unter Umständen fatale Folgen, denn dies würde bedeuten, dass dem Arbeitsplatz nicht nur ein Werkstückträger zugeführt wird, sondern eine Mehrzahl von Werkstückträgern. Die Folge hiervon wäre, dass die gesamte Anlage auf Störung schalten würde. Dadurch nun, dass gemäß der Erfindung der Servomotor der Antriebseinheit einer Funktionskomponente nunmehr eine Regelung aufweist, die dafür sorgt, dass der Motor bestromt bleibt, selbst wenn der Motor die vorgesehene Endlage nicht erreicht hat, ohne dass der Motor bei der Bestromung überhitzt. Dies vor dem Hintergrund, dass wenn aufgrund eines Hindernisses im Transportweg der Einrichtung zur Interaktion mit z. B. einem Werkstückträger, nach Wegfall des Hindernisses, die Einrichtung zur Interaktion dennoch ihre Endstellung erreicht, ganz ähnlich wie dies bei einem Pneumatikantrieb der Fall ist. Die Regelung sorgt in diesem Falle dafür, dass die Stromzufuhr so weit reduziert wird, dass eine Überhitzung des Servomotors nicht stattfindet. Das heißt, durch die Reduzierung des Stromes wird das von dem Motor aufgebrachte Moment reduziert, aber es wird immerhin ein Moment aufrechterhalten, das dafür sorgt, dass dann, wenn sich eine Lücke in dem Werkstückträger bietet, der Finger als Einrichtung zur Interaktion mit dem Werkstückträger in diese Lücke einlaufen kann, und somit verhindert, dass mehrere Werkstückträger auf einmal einem Arbeitsplatz zugeführt werden.

In ähnlicher oder gleicher Weise stellt sich die Problematik auch bei einer Funktionskomponente mit einer Weichenzunge bzw. als Hubeinrichtung dar. Denn auch hier kann es sein, dass durch welche Gründe auch immer, die Einrichtung zur Interaktion mit dem Werkstückträger also beispielsweise die Weichenzunge als Teil der Funktionskomponente nicht in die vorgesehene Endlage überführt werden kann, sondern in ihrem Weg blockiert wird.

Erst durch die erfindungsgemäße Regelung des Servomotors, wird der Einsatz von Servomotoren als Teil einer Antriebseinheit einer Funktionskomponente, wie sie zuvor beschrieben worden ist, möglich. Insofern können auch die Vorteile, die mit der Verwendung von elektrischen Antrieben verbunden sind, erst verwirklicht werden. Die Vorteile bestehen in einer einfachen Handhabung, einer robusten Bauweise, geringen Wartungskosten, einer einfachen Ansteuerung der Servomotoren, und schlussendlich auch in geringen Unterhaltskosten. Auch ist die Installation wesentlich weniger aufwendig als bei einer Druckluftanlage.

Vorteilhafte Merkmale und Ausgestaltungen der Erfindung ergeben sich aus den Unteransprüchen.

So ist insbesondere vorgesehen, dass der Servomotor einen elektrischen Eingang mit einem Anschluss für die Stromversorgung, Massebezug sowie einen Anschluss für eine Steuerung zur Einleitung der Vor- und Rückwärtsbewegung des Servomotors aufweist.

Darüber hinaus ist vorgesehen, dass der Servomotor einen Sensorausgang mit einem Anschluss für Stromversorgung, Massebezug sowie einen Anschluss für die Rückmeldung der jeweils erreichten Endlage aufweist. Sowohl der elektrische Eingang des Servomotors als auch der Sensorausgang sind vorteilhaft mit einer externen Steuerung verbunden, wobei der elektrische Eingang schlussendlich ausschließlich der Steuerung der Funktionskomponente dient. Über den Sensorausgang hingegen wird in Verbindung mit der externen Steuerung erreicht, dass beispielsweise durch die Steuerung der Roboterarm das Signal zur Entnahme des Werkstückes erhält. Des Weiteren wird durch den Sensorausgang bei Ausfall der Energieversorgung durch den elektrischen Eingang ein Nothub über die Stromversorgung des Sensorausgangs bewerkstelligt, um z. B. die Förderbahn zu sperren.

Es wurde bereits darauf hingewiesen, dass bei Horizontalfördereinrichtungen der eingangs genannten Art drei unterschiedliche Funktionskomponenten zum Einsatz gelangen. Die eine erste Funktionskomponente als eine Einrichtung zur Interaktion mit dem Werkstückträger, ist als ein in den Weg der auf der Horizontalförderbahn geförderter Werkstückträger verschieblicher Finger ausgebildet. Das heißt, dass durch den Finger als Einrichtung zur Interaktion als Teil einer Funktionskomponente entweder der Werkstückträger zur Entnahme des Werkstücks durch beispielsweise einen Roboterarm angehalten wird, oder aber durch den Finger eine Vereinzelung von auf der Horizontalförderbahn hintereinander aufstehender Werkstückträger erfolgt. Der Finger steht hierbei durch eine Kulissenführung und einen Spindeltrieb mit dem Servomotor in Verbindung.

In Bezug auf eine in der Horizontalförderbahn angeordnete Weichenzunge als Einrichtung zur Interaktion mit dem Werkstück ist insbesondere vorgesehen, dass die Weichenzunge durch ein Planetengetriebe mit dem Servomotor verbunden ist. Durch den Einsatz eines Planetengetriebes können auf kleinstem Raum verhältnismäßig große Über- oder Untersetzungen bewerkstelligt werden. Möglich ist aber auch ein Direktantrieb der Weichenzunge durch einen Servomotor, gegebenenfalls mit Zwischenschaltung einer Rutschkupplung, um die Gefährdung von Bedienpersonal, z. B. durch eingeklemmte Finger zu verhindern.

Als weitere Funktionskomponente zur Interaktion mit dem Werkstückträger ist eine in der Horizontalförderbahn angeordnete Hubeinrichtung vorgesehen. Die Hubeinrichtung als Funktionskomponente umfasst als Einrichtung zur Interaktion mit dem Werkstückträger mehrere Aushebestangen, die mit einem Spindeltrieb zum Ausführen der Hubbewegung in Verbindung stehen, wobei der Spindeltrieb durch ein Getriebe mit dem Servomotor verbunden ist, wobei das Getriebe beispielsweise als Riemen- oder Rädertrieb ausgebildet sein kann. Insbesondere der Spindeltrieb ist vorteilhaft nicht selbsthemmend ausgebildet, sodass dann, wenn nach Erreichen der Endstellung der Hubeinrichtung von oben beispielsweise durch den Roboterarm eine Kraft auf das Werkstück bzw. den Werkstückträger aufgebracht wird, die Hubeinrichtung in vertikaler Richtung nachgeben kann.

Es wurde bereits dargelegt, dass der elektrische Eingang sowie der Sensorausgang mit einer externen Steuerung in Verbindung stehen. Es ist allerdings darüber hinaus eine zweite Steuerung für die Einleitung der Vor- und Rückwärtsbewegung des Servomotors vorgesehen, sowie die Regelung für die Stromzufuhr des Servomotors in Abhängigkeit von der Temperatur des Servomotors. Die Steuerung und die Regelung sind wie Mikrokontroller basiert ausgebildet. Vorteilhaft befindet sich ein solcher Mikrokontroller in einem die Antriebseinheit aufnehmenden Gehäuse. Insofern wird eine kompakte Bauweise ermöglicht, die eine hohe Schutzartklasse der Antriebseinheit von mindestens IP 65, vorzugsweise allerdings IP 67 zulässt.

Gegenstand der Erfindung ist ebenfalls eine Horizontalfördereinrichtung mit einer Horizontalförderbahn zum Transport von Transporteinrichtungen, insbesondere von Werkstückträgern mit mindestens einer an der Horizontalförderbahn angeordneten Funktionskomponente der vorbeschriebenen Art.

Anhand der Zeichnungen wird die Erfindung nachstehend beispielhaft näher erläutert.
- Fig. 1: zeigt einen Ausschnitt aus einer Horizontalförderbahn in einer Draufsicht;
- Fig. 2: zeigt eine Ansicht gemäß der Linie II-II aus Fig. 1;
- Fig. 3: zeigt eine erste in dem Profil der Förderbahn eingebaute Funktionskomponente mit einem in den Förderweg des Werkstückträgers einfahrbaren Finger;
- Fig. 4: zeigt die Funktionskomponente gemäß Fig. 3 in einer Ansicht im Schnitt;
- Fig. 5: zeigt eine zweite Funktionskomponente als Weiche mit einer Weichenzunge als Einrichtung zur Interaktion mit einem Werkstückträger mit der Darstellung der Weichenzunge in einer ersten Position;
- Fig. 6: zeigt eine Darstellung gemäß Fig. 5 mit der Weichenzunge in einer zweiten Position;
- Fig. 7: zeigt eine Ansicht gemäß der Linie VII - VII aus Fig. 6;
- Fig. 8: zeigt eine Draufsicht auf die Horizontalförderbahn gemäß Fig. 1 mit in der Horizontalförderbahn angeordneter Hubeinrichtung als dritte Funktionskomponente;
- Fig. 9: zeigt eine Ansicht gemäß der Linie IX - IX aus Fig. 8.

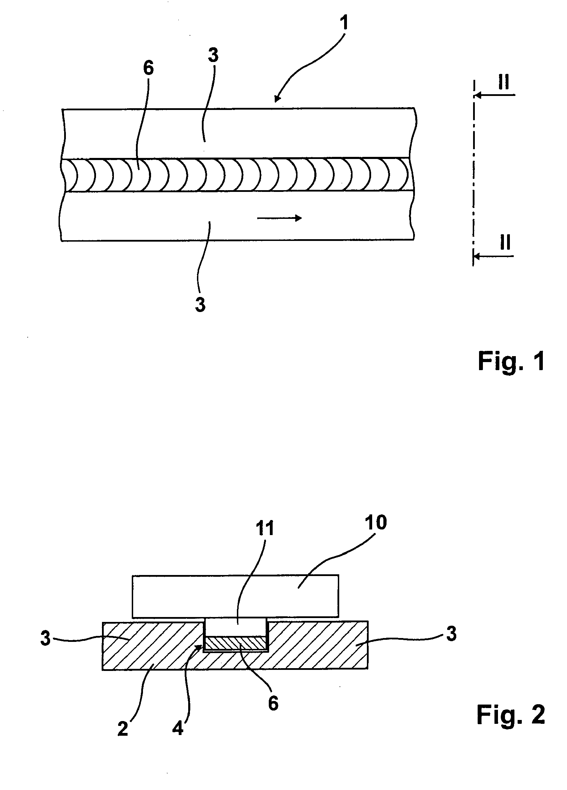

Aus der Darstellung gemäß Fig. 1 ist die Horizontalförderbahn als Ausschnitt dargestellt und mit 1 bezeichnet. Im Querschnitt gemäß Fig. 2 weist die Horizontalförderbahn ein in etwa C-förmiges Profil 2 auf, wobei die Schenkel 3 des C-förmigen Profils nach unten offen kastenförmig ausgebildet sind. Zwischen den beiden Schenkeln 3 befindet sich zur Bildung des C-förmigen Profiles 2 eine Vertiefung 4, wobei in der Vertiefung 4 die mit 6 bezeichnete Transportkette verläuft. Die Transportkette 6 besteht aus einzelnen relativ zueinander verschwenkbaren Gliedern und ist in der Horizontalförderbahn 1 als Teil der Horizontalfördereinrichtung umlaufend verlaufend ausgebildet.

Im Folgenden wird die Funktionsweise der Horizontalfördereinrichtung mit der Horizontalförderbahn 1 anhand des Transportes eines Werkstückträgers beispielhaft erläutert. Der Werkstückträger 10 weist einen Fuß 11 auf, der auf der Transportkette 6 aufsteht. Die Mitnahme des Werkstückträgers 10 erfolgt durch Reibschluss zwischen dem Fuß 11 des Werkstückträgers 10 und der Transportkette 6. Der Werkstückträger 10 erstreckt sich seitlich über die Schenkel 3 der Horizontalförderbahn 1 und stützt sich gegebenenfalls hierauf ab. Die seitliche Führung des Werkstückträgers 10 erfolgt durch die vertikalen Schenkel der Vertiefung 4 in dem C-förmigen Profil der Horizontalförderbahn 1.

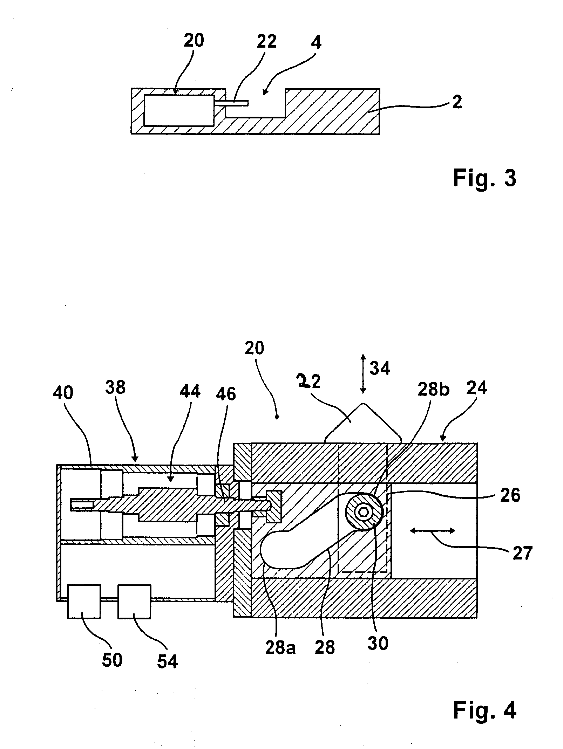

Eine erste Funktionskomponente 20 mit einem seitlich in die Vertiefung 4 des C-förmigen Profiles 2 einfahrbaren Fingers 22 ist in der Fig. 3 dargestellt. Der Finger 22 bildet als Stopper die Einrichtung zur Interaktion mit dem Werkstückträger. Die Funktionskomponente 20 ist hierbei in einem kastenförmigen Schenkel 3 des C-förmigen Profiles 2 untergebracht, wie sich dies unmittelbar in Anschauung von Fig. 3 ergibt.

Betrachtet man nunmehr die Fig. 4, so ergibt sich für die erste Funktionskomponente 20 ein Gehäuse 24, wobei in dem Gehäuse 24 eine Kulisse 26 in Richtung des Doppelpfeiles 27 beweglich geführt ist. Die Kulisse 26 weist eine Kulissenführung 28 auf, wobei durch die Kulissenführung, die in etwa S-förmig ausgebildet ist, ein Kulissenführungsglied aufgenommen wird. Das Kulissenführungsglied 30 steht mit dem Finger 22 in Verbindung, der bei Bewegung der Kulisse 26 in Richtung des Pfeiles 27 entsprechend dem Pfeil 34 entweder aus- oder eingefahren wird. Die Kulissenführung 28 besitzt endseitig Totpunktpositionen 28a und 28b die verhindern, dass bei Druck oder Zug auf den Finger 32 dieser ohne Bewegung der Kulisse 26 verschieblich ist.

Die Kulisse 26 wird angetrieben durch die Antriebseinheit 38; sie umfasst ein Gehäuse 40, in dem der Servomotor 44 gelagert ist. Der Servomotor 44 steht durch einen Spindeltrieb 46 mit der Kulisse 26 in Verbindung. Das heißt, dass bei Betrieb des Servomotors durch den Spindeltrieb 46 die Kulisse in Richtung des Doppelpfeiles 27 verschieblich ist. Das Gehäuse 40 weist darüber hinaus den elektrischen Eingang 50 sowie den Sensorausgang 54 auf. Sowohl der elektrische Eingang 50 als auch der Sensorausgang 54 können allerdings auch in einem einzigen Stecker zusammengeführt sein, und sind mit einer nicht dargestellten externen Steuerung verbunden.

Der elektrische Eingang 50 umfasst einen Anschluss für die Stromversorgung, Massebezug sowie einen Anschluss für die Steuerung zur Einleitung der Vor- und Rückwärtsbewegung des Servomotors. Der Sensorausgang verfügt über einen Anschluss für Stromversorgung, Massebezug und einen Anschluss für die Rückmeldung der erreichten Endlagen.

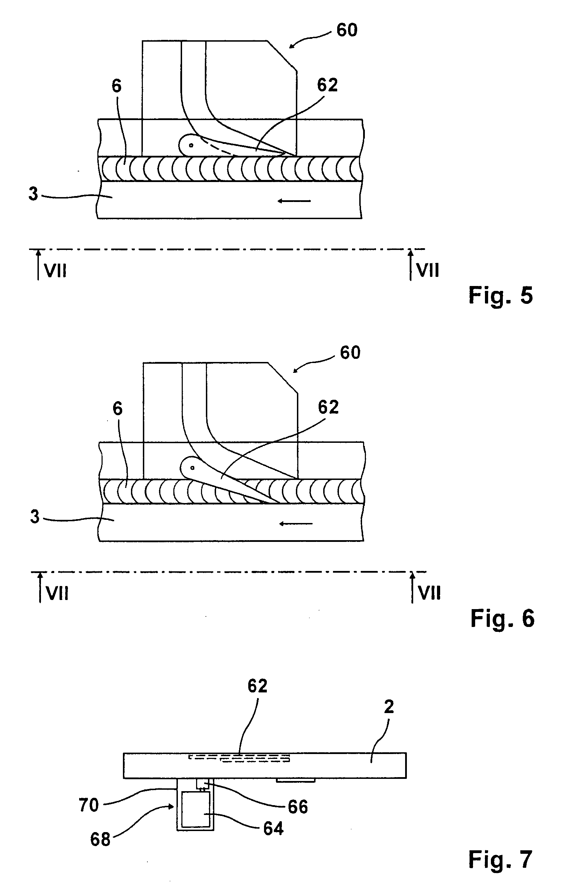

Aus den Figuren 5 und 6 ergibt sich der Aufbau einer zweiten Funktionskomponente 60. Die Funktionskomponente 60 umfasst eine Weichenzunge 62, die zwei verschiedene Endlagen einnehmen kann, wie dies in den Figuren 5 und 6 dargestellt ist. In der Darstellung gemäß Fig. 6 befindet sich die Weichenzunge 62 als Einrichtung zur Interaktion mit dem Werkstückträger, in der Vertiefung 4 des C-förmigen Profiles 2 der Horizontalförderbahn 1.

Der Antrieb der Weichenzunge 62 erfolgt über den Servomotor 64, sowie eine Kupplung 66, wobei anstelle der Kupplung auch ein Planetengetriebe vorgesehen sein kann. Auch hier bildet der Servomotor 64 mit der Kupplung 66 bzw. dem Planetengetriebe eine Antriebseinheit 68, die in einem gemeinsamen Gehäuse 70 untergebracht sein kann. An dem Gehäuse sind, hier nicht dargestellt, ein elektrischer Eingang und ein Sensorausgang vorgesehen, wie sie in Fig. 4 gezeigt sind. Insofern wird auf die diesbzgl. Erläuterungen verwiesen.

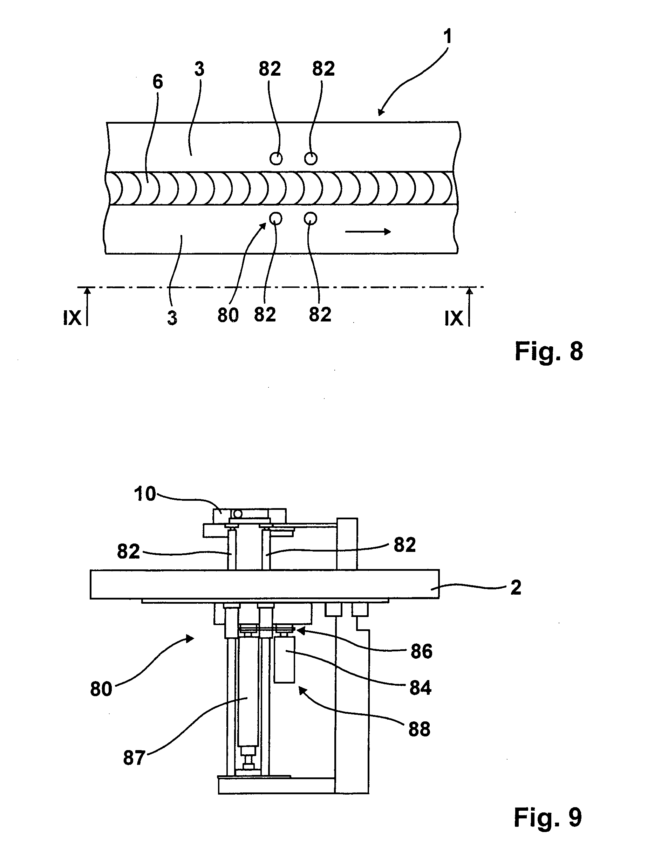

Aus der Darstellung gemäß Fig. 8 als Draufsicht auf eine Horizontalförderbahn 1 ist die dritte Funktionskomponente 80 erkennbar. Die dritte Funktionskomponente 80 als Hubeinrichtung ausgebildet, zeigt vier Aushubstangen 82 (Fig. 9). Durch die Aushubstangen 82 wird der Werkstückträger 10 von der Horizontalförderbahn ausgehoben. Die vier Aushubstangen 82 sind im Rechteck zueinander angeordnet (siehe Fig. 8). Die Aushubstangen bilden die Einrichtung zur Interaktion mit dem Werkstückträger. Die Antriebseinheit 88 für die Aushubstangen 90 umfasst wiederum einen Servomotor 84, der mit einem Riementrieb 86 einen Spindeltrieb 87 antreibt, der mit den Aushubstangen 82 derart in Verbindung steht, dass bei Ausfahren des Spindeltriebes 87 die Aushubstangen und somit der Werkstückträger 10 angehoben werden, wie dies in Fig. 9 dargestellt ist. Der Servomotor 84 weist ein Gehäuse 90 auf, wobei das Gehäuse, ohne dass dies dargestellt ist, ebenfalls einen elektrischen Eingang und einen Sensorausgang besitzt, wie dies in Fig. 4 dargestellt ist. Auf die diesbzgl. Erläuterungen zu der ersten Funktionskomponente wird verwiesen.

### Bezugszeichenliste:

- 1: Horizontalförderbahn der Horizontalfördereinrichtung
- 2: C-förmiges Profil
- 3: Schenkel des C-förmigen Profils
- 4: Vertiefung des C-förmigen Profils
- 6: Transportkette
- 10: Werkstückträger
- 11: Fuß des Werkstückträgers
- 20: erste Funktionskomponente
- 22: Finger
- 24: Gehäuse
- 26: Kulisse
- 27: Doppelpfeil
- 28: Kulissenführung
- 28a: Totpunktposition
- 28b: Totpunktposition
- 30: Kulissenführungsglied
- 38: Antriebseinheit
- 40: Gehäuse
- 44: Servomotor
- 46: Spindeltrieb
- 50: elektrischer Eingang
- 54: Sensorausgang
- 60: zweite Funktionskomponente
- 62: Weichenzunge
- 64: Servomotor
- 66: Kupplung/Planetengetriebe
- 68: Antriebseinheit
- 70: Gehäuse
- 80: dritte Funktionskomponente
- 82: Aushubstange
- 84: Servomotor
- 86: Riementrieb
- 87: Spindeltrieb
- 88: Antriebseinheit

## Patentansprüche

1. Funktionskomponente (20, 60, 80) einer Horizontalfördereinrichtung zur Vereinzelung mehrerer hintereinander auf der Horizontalförderbahn aufstehender Werkstückträger umfassend eine Antriebseinheit (38, 68, 88) und eine mit der Antriebseinheit verbundene mechanisch arbeitende Einrichtung zur Interaktion mit auf der Horizontalförderbahn (1) der Horizontalfördereinrichtung transportierten Transporteinrichtungen, z. B. Werkstückträgern (10), wobei die Antriebseinheit einen Servomotor (44, 64, 84) umfasst, wobei der Servomotor (44, 64, 84) eine Regelung aufweist, **dadurch gekennzeichnet, dass** durch die Regelung bei Nichterreichen einer vorgegebenen Endlage des Servomotors die Bestromung des Servomotors (44, 64, 84) aufrecht erhalten bleibt, jedoch die Stromaufnahme durch den Servomotor (44, 64, 84) in Abhängigkeit von der max. zulässigen Temperatur des Servomotors (44, 64, 84) geregelt wird.

2. Funktionskomponente (20, 60, 80) nach Anspruch 1,
**dadurch gekennzeichnet,**
**dass** der Servomotor (44, 64, 84) einen elektrischen Eingang (50) mit einem Anschluss für die Stromversorgung, Massebezug sowie einen Anschluss für die Steuerung zur Einleitung der Vor- oder Rückwärtsbewegung des Servomotors (44, 64, 84) aufweist.

3. Funktionskomponente (20, 60, 80) nach Anspruch 2,
**dadurch gekennzeichnet,**
**dass** der Servomotor (44, 64, 84) einen Sensorausgang (54) mit einem Anschluss für die Stromversorgung, Massebezug sowie zwei Anschlüsse für die Rückmeldung der erreichten Endlagen aufweist.

4. Funktionskomponente (20, 60, 80) nach einem der vorangehenden Ansprüche,
**dadurch gekennzeichnet,**
**dass** die Einrichtung zur Interaktion mit der Transporteinrichtung, z. B. dem Werkstückträger als ein in den Weg der auf der Horizontalförderbahn (1) geförderten Transporteinrichtungen (10) verschieblicher Finger (22) ausgebildet ist.

5. Funktionskomponente (20, 60, 80) nach Anspruch 4,
**dadurch gekennzeichnet,**
**dass** der Finger (22) durch eine in einem Gehäuse (24) geführte Kulisse (26) und einem Spindeltrieb (46) mit dem Servomotor (44) der Antriebseinheit (38) in Verbindung steht.

6. Funktionskomponente (20, 60, 80) nach einem der voranstehenden Ansprüche,
**dadurch gekennzeichnet,**
**dass** die Einrichtung zur Interaktion mit der Transporteinrichtung, z. B. dem Werkstückträger (10) als in der Horizontalförderbahn (1) angeordnete Weichenzunge (62) ausgebildet ist.

7. Funktionskomponente (20, 60, 80) nach Anspruch 6,
**dadurch gekennzeichnet,**
**dass** die Weichenzunge (62) durch ein Planetengetriebe oder eine Kupplung (66) mit dem Servomotor (64) in Verbindung steht.

8. Funktionskomponente (20, 60, 80) nach einem der voranstehenden Ansprüche,
**dadurch gekennzeichnet,**
**dass** die Einrichtung zur Interaktion mit der Transporteinrichtung z. B. mit dem Werkstückträger (10) als in der Horizontalförderbahn (1) angeordnete Aushubstangen (82) ausgebildet ist.

9. Funktionskomponente (20, 60, 80) nach Anspruch 8,
**dadurch gekennzeichnet,**
**dass** die Aushubstangen (82) mit einem Spindeltrieb (87) zum Ausführen der Hubbewegung in Verbindung stehen, wobei der Spindeltrieb (87) durch ein Getriebe mit dem Servomotor (84) verbunden ist.

10. Funktionskomponente (20, 60, 80) nach Anspruch 9,
**dadurch gekennzeichnet,**
**dass** das Getriebe als Riemen- oder Rädertrieb (86) ausgebildet ist.

11. Funktionskomponente (20, 60, 80) nach Anspruch 2 oder 3,
**dadurch gekennzeichnet,**
**dass** sowohl der elektrische Eingang (50) als auch der Sensorausgang (54) mit einer externen Steuerung in Verbindung stehen.

12. Funktionskomponente (20, 60, 80) nach einem der voranstehenden Ansprüche,
**dadurch gekennzeichnet,**
**dass** der Servomotor (44, 64, 84) als Teil der Antriebseinheit (38, 68, 88) eine interne Steuerung zur Einleitung der Vor- und Rückwärtsbewegung des Servomotors aufweist, wobei die interne Steuerung und die Regelung Mikrokontroller basiert ausgebildet sind.

13. Funktionskomponente (20, 60, 80) nach Anspruch 12,
**dadurch gekennzeichnet,**
**dass** der Mikrokontroller in einem die Antriebseinheit (38, 68, 88) aufnehmenden Gehäuse (40, 70, 90) angeordnet ist.

14. Horizontalförderbahn (1) zum Transport von Transporteinrichtungen z. B. von Werkstückträgern (10),
**gekennzeichnet durch**
mindestens eine an der Horizontalförderbahn (1) angeordnete Funktionskomponente (20, 60, 80) nach einem oder mehrerer der voranstehenden Ansprüche.

## Claims

1. A functional component (20, 60, 80) of a horizontal conveyor device for separating several workpiece holders standing behind one another on the horizontal conveyor track
comprising a drive unit (38, 68, 88) and a mechanically operating device connected to the drive unit for interacting with transport devices, e.g. workpiece holders (10), transported on the horizontal conveyor track (1) of the horizontal conveyor device,
wherein
the drive unit comprises a servomotor (44, 64, 84), wherein the servomotor (44, 64, 84) has a closed-loop control,
**characterized in that**
when the servomotor does not reach a specified end position, the closed-loop control maintains the current feed to the servomotor (44, 64, 84), but the current draw of the servomotor (44, 64, 84) is controlled as a function of the maximum permissible temperature of the servomotor (44, 64, 84).

2. The functional component (20, 60, 80) according to claim 1,
**characterized in that**
the servomotor (44, 64, 84) has an electrical input (50) with a connection for the current supply, a connection to the ground as well as a connection for the control for initiating the forward or backward movement of the servomotor (44, 64, 84).

3. The functional component (20, 60, 80) according to claim 2,
**characterized in that**
the servomotor (44, 64, 84) has a sensor output (54) with a connection for the current supply, a connection to the ground as well as two connections for reporting the attained end positions.

4. The functional component (20, 60, 80) according to one of the afore-mentioned claims,
**characterized in that**
the device for interacting with the transport device, e.g. the workpiece holder, is designed as a finger (22) that is displaceable into the path of the transport devices (10) conveyed on the horizontal conveyor track (1).

5. The functional component (20, 60, 80) according to claim 4,
**characterized in that**
the finger (22) is connected to the servomotor (44) of the drive unit (38) by way of a connecting link (26), guided in a housing (24), and a spindle drive (46).

6. The functional component (20, 60, 80) according to one of the afore-mentioned claims,
**characterized in that**
the device for interacting with the transport device, e.g. the workpiece holder (10), is designed as a switch tongue (62) disposed in the horizontal conveyor track (1).

7. The functional component (20, 60, 80) according to claim 6,
**characterized in that**
the switch tongue (62) is connected to the servomotor (64) by an epicyclic transmission or a coupling (66).

8. The functional component (20, 60, 80) according to one of the afore-mentioned claims,
**characterized in that**
the device for interacting with the transport device, e.g. with the workpiece holder (10), is designed as lifting rods (82) disposed in the horizontal conveyor track (1).

9. The functional component (20, 60, 80) according to claim 8,
**characterized in that**
the lifting rods (82) are connected to a spindle drive (87) for carrying out the lifting motion, wherein the spindle drive (87) is connected to the servomotor (84) by a transmission.

10. The functional component (20, 60, 80) according to claim 9,
**characterized in that**
the transmission is designed as a belt or gear transmission (86).

11. The functional component (20, 60, 80) according to claim 2 or 3,
**characterized in that**
the electrical input (50) as well as the sensor output (54) are connected to an external open-loop control.

12. The functional component (20, 60, 80) according to one of the afore-mentioned claims,
**characterized in that**
as part of the drive unit (38, 68, 88), the servomotor (44, 64, 84) has an internal open-loop control for initiating the forward and backward movement of the servomotor, wherein the internal open-loop control and the closed-loop control are designed based on a microcontroller.

13. The functional component (20, 60, 80) according to claim 12,
**characterized in that**
the microcontroller is disposed in a housing (40, 70, 90) receiving the drive unit (38, 68, 88).

14. A horizontal conveyor track (1) for transporting transport devices, e.g. workpiece holders (10),
**characterized by**
at least one functional component (20, 60, 80) according to one or several of the afore-mentioned claims disposed on the horizontal conveyor track (1).

## Revendications

1. Composants fonctionnels (20, 60, 80) d'une installation 'approvisionnement horizontale pour séparer plusieurs supports de pièces d'usinage disposées l'une suivant l'autre, sur la voie d'approvisionnement horizontale, comportant une unité d'entraînement (38, 68, 88) et une installation d'actionnement mécanique couplée à l'unité d'entraînement pour une interaction avec les installations de transport, par exemple des supports de pièces d'usinage (10) disposées sur la voie d'approvisionnement horizontale de l'installation d'approvisionnement horizontale (1),
ladite unité d'entraînement comportant un servomoteur (44, 64, 84), ledit servomoteur (44, 64, 84) présentant une régulation, **caractérisés en ce que** la régulation est agencée pour maintenir l'alimentation électrique du servomoteur (44, 64, 84) lorsqu'une position finale prédéterminée n'est pas atteinte, toutefois, l'alimentation en courant électrique par le servomoteur (44, 64, 84) étant régulée en fonction de la température maximale acceptable du servomoteur (44, 64, 84).

2. Composants fonctionnels (20, 60, 80) selon la revendication 1,
**caractérisés en ce que,**
le servomoteur (44, 64, 84) comporte une entrée électrique (50) avec un raccordement pour une alimentation électrique, une prise de terre ainsi qu'un raccordement pour le pilotage de l'enclenchement du mouvement d'avance et de recul du servomoteur (44, 64, 84).

3. Composants fonctionnels (20, 60, 80) selon la revendication 2,
**caractérisés en ce que,**
le servomoteur (44, 64, 84) comporte une sortie de capteur (54) avec un raccordement pour l'alimentation électrique, une prise de terre ainsi qu'un raccordement pour le retour d'information correspondant à l'arrivée dans la position finale.

4. Composants fonctionnels (20, 60, 80) selon l'une des revendications précédentes,
**caractérisés en ce que,**
l'installation d'actionnement pour une interaction avec l'installation de transport, par exemple du support de pièces d'usinage, est réalisée sous la forme d'un doigt (22) mobile en translation sur la voie d'approvisionnement horizontale (1) l'installation de transport (10).

5. Composants fonctionnels (20, 60, 80) selon la revendication 4,
**caractérisés en ce que,**
le doigt (22) est couplé par une coulisse (26) guidée logée dans un boîtier (24), et est couplé par un entraînement à vis (46) au servomoteur (44) de l'unité d'entraînement (38).

6. Composants fonctionnels (20, 60, 80) selon l'une des revendications précédentes,
**caractérisés en ce que,**
l'installation d'actionnement pour une interaction avec l'installation de transport, par exemple du support de pièces d'usinage (10), est réalisée sous la forme d'une lame d'aiguillage (62) disposée sur la voie d'approvisionnement horizontale (1).

7. Composants fonctionnels (20, 60, 80) selon la revendication 6,
**caractérisés en ce que,**
la lame d'aiguillage (62) est couplée au servomoteur (64) par un entraînement du type planétaire ou un embrayage (66).

8. Composants fonctionnels (20, 60, 80) selon l'une des revendications précédentes,
**caractérisés en ce que,**
l'installation d'actionnement pour une interaction avec l'installation de transport, par exemple du support de pièces d'usinage (10), est réalisée sous la forme de tiges de piston (82) disposées sur la voie d'approvisionnement horizontale (1).

9. Composants fonctionnels (20, 60, 80) selon la revendication 8,
**caractérisés en ce que,**
les tiges de piston (82) sont liées à une vis (87) pour effectuer le déplacement de course linéaire, dans lequel la vis (87) est couplée par l'intermédiaire d'un entraînement au servomoteur (84).

10. Composants fonctionnels (20, 60, 80) selon la revendication 9,
**caractérisés en ce que,**
l'entraînement est configuré comme un entraînement de courroies ou de roulements (86).

11. Composants fonctionnels (20, 60, 80) selon les revendications 2 ou 3,
**caractérisés en ce que,**
ladite entrée électrique (50) ainsi que la sortie de capteur (54) sont couplées à une commande externe.

12. Composants fonctionnels (20, 60, 80) selon l'une des revendications précédentes,
**caractérisés en ce que,**
le servomoteur (44, 64, 84) constitue, en tant que partie de l'unité d'entraînement (38, 68, 88), une commande interne pour l'enclenchement du mouvement d'avance ou de recul du servomoteur, dans lequel la commande interne et la régulation sont basées sur un microcontrôleur.

13. Composants fonctionnels (20, 60, 80) selon la revendication 12,
**caractérisés en ce que,**
le microcontrôleur est monté dans un boîtier (40, 70, 90) agencé pour loger l'unité d'entraînement (38, 68, 88).

14. Voie d'approvisionnement horizontale (1) pour l'amenée d'installations d'approvisionnement, par exemple de supports de pièces d'usinage (10),
**caractérisée par,**
au moins un composant fonctionnel (20, 60, 80) monté sur la voie d'approvisionnement horizontale (1), selon l'une quelconque des revendications précédentes.
